# EUROPEAN PATENT APPLICATION

(11) **EP 1 623 897 A1**
(43) Date of publication of application: **08.02.2006**
(21) Application number: 04732797.8
(22) Date of filing: 13.05.2004
(51) Int. Cl.: B60S 1/08, G01N 21/17, G01W 1/14

(54) **METHOD AND DEVICE FOR CONTROLLING WIPER**

(30) Priority: 15.05.2003 JP 2003136879
(71) Applicant: NILES CO., LTD., Tokyo 143-8521 (JP)
(72) Inventor: KOKURYO, Kazuto, Ohtsu-shi, Shiga 5202144 (JP); MAKINO, Yoshiteru, Ohtsu-shi, Shiga 5202144 (JP); FURUSAWA, Satoshi c/o Nippon Sheet Glass Co., Ltd., Minato-ku, Tokyo 105-8552 (JP)
(74) Representative: Wilson Gunn
(86) International application number: PCT/JP2004/006780
(87) International publication number: WO 2004/101332

(57) **Abstract**

A wiper control method and a wiper control device which adjusts a wiping determining condition for determining the wiping state of a wiper according to a driving scene are provided. The driving scene is determined based on comprehensive situation determination from vehicle state information such as driving, stop, etc. and driving environment information such as rainfall state.
According to the determined driving scene, the wiping determining conditions for determining the wiping state of the wiper is adjusted. Such wiping determining conditions include detection sensitivity of raindrops adhering on the detection surface, correspondence between the rainfall level and the wiping level, etc.

## Description

### FIELD OF THE INVENTION

The present invention relates to a wiper control method and a wiper control device and more particularly to a wiper control method and a wiper control device in which wiping determining conditions to determine wiping state of the wiper is actively adjusted according to a driving scene.

### BACKGROUND ART

In a conventional wiper control device for controlling wiping operation of a wiper based on an output of a raindrop detecting sensor, a rainfall is classified in stepwise levels, and specific intermittence time is fixedly set to correspond to each of the rainfall levels. And the intermittence time is changed in accordance with change of the rainfall level. In the meantime, a wiping frequency considered as appropriate for a specific rainfall largely depends on a sense of individual drivers, which is difficult to be decided unambiguously. With this background, so-called sensitivity volume adjustment technique has been used.

In the invention in the JP-A-4-349053, as shown in Fig. 1, 7 stages of intermittence time step are set in accordance with the rainfall level. In addition, in each step, three types of intermittence time is set corresponding to three modes. In this invention, based on the set position of the so-called sensitivity adjustment volume, an actual intermittence time is chosen from the three modes. Such adjustment is realized by choosing a short intermittence time from the same step when a driver sets the volume high, for example. By this, even with the same rainfall state, for example, the intermittence time becomes short, and that equals to a higher detecting sensitivity for the driver.

In this way, to add an element of a difference in sense of individuals to determine an appropriate wiping frequency for a specific rain fall is useful in matching the wiper operation to human senses. However, verification by the inventors has found the following.

That is, even the same driver might have different volume sensitivities to request in accordance with a driving scene. To facilitate understanding, concrete explanation will be given using entrance to/exit from a tunnel as an example of the driving scene. Suppose that a vehicle is traveling at a constant speed, rain with a considerably large diameter is continuously falling before and after the tunnel and a rainfall is zero in the tunnel.

When a driver has been driving for a long time in the same rainfall before entrance to the tunnel, the driver is accustomed to the rainfall state. Therefore, a driver who prefers low volume sensitivity would set the sensitivity adjustment volume to a low sensitivity.
Next, since there is no rainfall in the tunnel, unnecessary wiping is considered as bothersome. Especially, for the sense of a driver who prefers low volume sensitivity, unnecessary wiping is bothersome.
In the meantime, inside the tunnel, such a phenomenon occurs that micro water drops from water splashed by a vehicle in front adhere to the windshield and deteriorate visibility, but such micro splash water should be wiped with somewhat low volume sensitivity. Next, at exit from the tunnel, drivers would hope that wiping should be performed quickly for rapid deterioration of the visibility in many cases. Therefore, even if the rainfall is the same before and after the tunnel, higher volume sensitivity is desired at exit from the tunnel.

In this way, it was found out that even the same driver has different necessary volume sensitivities in accordance with the driving scene. Conversely, even if the volume is set to the same sensitivity and evaluated by the same driver, there is a possibility that it is felt as too dull or too sensitive depending on the driving scene. Therefore, only with the sensitivity adjustment by sensitivity adjustment volume, there might be such a state that does not match the sense of the driver. Also, to adjust the sensitivity volume while predicting the next state is bothersome for drivers.

As another conventional technique, a method for detecting dynamic adhesion of raindrops (JP-A-2001-180447) and a method for evaluating fluctuation of an output signal of a light receiving element (JP-A-2002-277386) are presented by the inventors. Also, as a conventional example of a method for detecting raindrops, a method for detecting the raindrop in comparison with a reference value (so-called threshold value method) (JP-A-61-37560, for example) and a method for detecting raindrops by an integrated value of the light receiving element output (so-called integration method) (JP-A-4-349053) are disclosed.

### DISCLOSURE OF THE INVENTION

The present invention was made based on the finding that even for the same driver, a sense for an appropriate wiping state can be fluctuated according to a driving scene. The present invention provides a wiper control method and a wiper control device which actively adjusts wiping determination conditions for determining a wiping state of a wiper and realizes the wiping state matching the sense of the driver in accordance with the driving scene.

Then, in the present invention, a vehicle state and driving environment are comprehensively judged and an appropriate wiping determination condition is set according to the scene. Here, the wiping determination conditions mean conditions to determine a specific wiping state for raindrops adhering to a detection surface. Such wiping determination conditions include detecting sensitivity of raindrops adhering to the detection surface, correspondence between the rainfall level and the wiping level, etc.

Next, in the present invention, each driving scene is determined from vehicle state information and driving environment information. The vehicle state information includes stop, driving, acceleration, deceleration, etc., while the driving environment information includes rainfall, fair weather, light and dark, inside a rainfall shelter such as a tunnel. In the present invention, the driving scene at a time is determined based on the process up to then. In the case of stop at a point of time, for example, the driving scene is determined based on whether the vehicle has been stopped up to then or decelerated and stopped from driving in the process up to then.

From the vehicle state information, for example, driving scenes such that a vehicle is decelerated from a specific constant-speed running, a vehicle is rapidly decelerated and stopped from a specific constant-speed running, a vehicle is accelerated from the stop state, etc. are determined. In the meantime, from the driving environment information, driving scenes such that a vehicle enters a tunnel from a specific rainfall state, a specific rainfall state or fair state has continued for a predetermined time of period, a bright state is turned to a dark state, etc. are determined.

Such determination of driving scene is made, for example, by identifying a status at a point of time (vehicle state and driving environment state) and by detecting occurrence of a specific event at a time later than the point of time. For example, when the vehicle state is constant-speed running at a point of time and the driving environment state is specific rainfall, a driving scene that a vehicle is decelerated from constant-speed running in the specific rainfall state can be determined by detecting an event that the vehicle is decelerated after that.

### BRIEF DESCRIPTION OF THE DRAWINGS

Fig. 1 is a diagram for explaining a conventional wiper control method.
Fig. 2 is a conceptual diagram for explaining a wiper control method of the present invention.
Fig. 3 is a block diagram for explaining the configuration of the wiper control device according to a first preferred embodiment of the present invention in the layered structure.
Fig. 4 is a block diagram for explaining the configuration of a wiping state control part.
Fig. 5 is a conceptual diagram for explaining a method for determining the scene.
Fig. 6 is a conceptual diagram for explaining a method for determining the scene.
Fig. 7 is a conceptual diagram for explaining a dynamic link method.
Fig. 8 is a flowchart for explaining operation of the first preferred embodiment.
Fig. 9 is a conceptual diagram for explaining a second preferred embodiment of the present invention.
Fig. 10 is a block diagram for explaining the configuration of the wiper control device according to the second preferred embodiment of the present invention in the layered structure.
Fig. 11 is a block diagram for explaining the configuration of the wiper control device according to a third preferred embodiment of the present invention in the layered structure.

### BEST MODE FOR CARRYING-OUT OF THE INVENTION

### (First Preferred Embodiment)

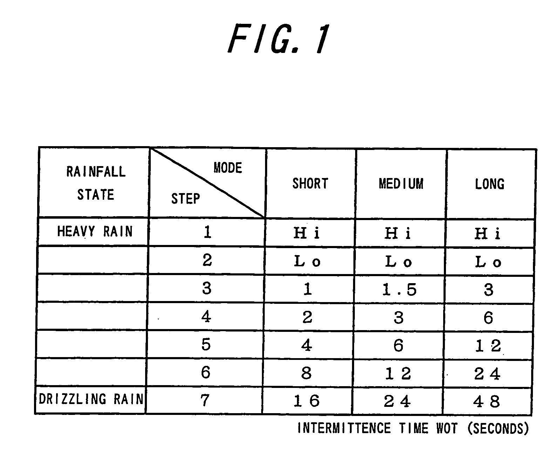

In order to facilitate understanding of a first preferred embodiment of the present invention, a control method by a conventional sensitivity adjustment volume will be explained using Fig. 1. In the conventional control method by sensitivity adjustment volume, if the rainfall state is specific drizzling rain, for example, the step of intermittence time is set to 7. The relationship between this specific drizzling rain and the step 7 is fixed from this time. That is, if the rainfall state is determined as drizzling, the intermittence time of the step 7 is selected all the time. And according to the sensitivity volume setting by the driver, actual intermittence time is chosen from the three modes of intermittence time included in the step 7.

In the present invention, such a mode may be used as the wiping determination condition. In concrete, an appropriate mode may be chosen from these plural modes according to the driving scene.

Also, in the present invention, the relationship between the rainfall state level and the step of intermittence time (wiping state) may be changed dynamically, not fixed to one-to-one. That is, the correspondence between each of the rainfall state levels and each of the wiping state levels is used as the wiping determination condition, and the correspondence between these may be changed according to the driving scene.

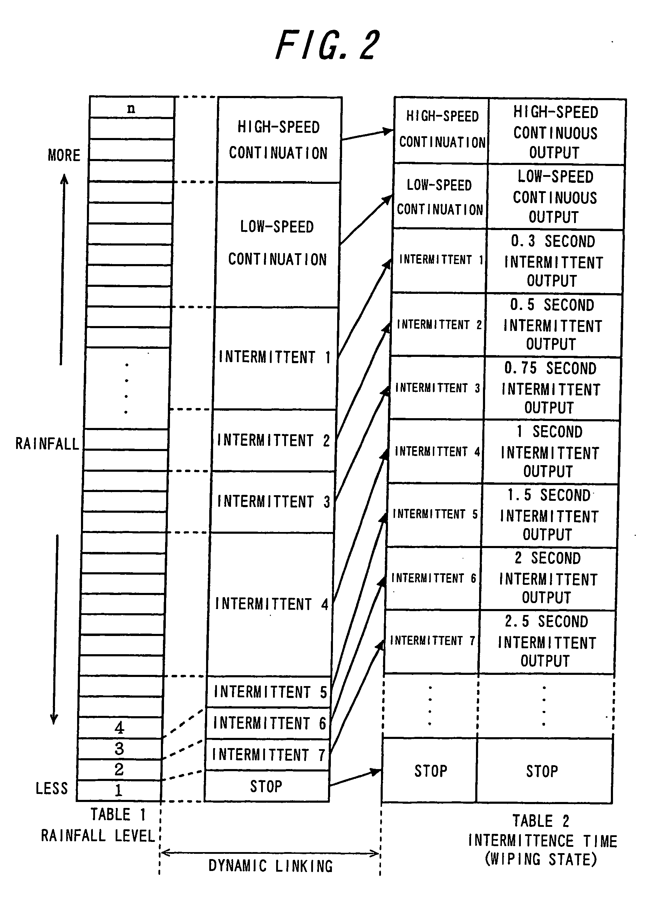

The method of the present invention will be described in concrete using Fig. 2. In Fig. 2, Table 1 and Table 2 are included.
In Table 1, the rainfall level is defined stepwise. In Table 2, the wiping state is classified to plural stepwise wiping levels according to wiping waiting time and wiping speed and defined. The wiping waiting time includes zero (that is, no waiting time).

Fig. 2 shows a definition example of the wiping state. As for the wiping state, as shown in Fig. 2, for example, the longer the wiping waiting time is, the longer the intermittence time becomes, and if the wiping waiting time becomes infinite (∞), it is the stop state.
In the meantime, the shorter the wiping waiting time is, the shorter the intermittence time becomes, and when the wiping waiting time is zero, it means continuous wiping. Then, the continuous wiping is divided into high-speed continuous wiping and low-speed continuous wiping. By combining the wiping waiting time and the wiping speed in this way, various wiping operations of the wiper can be controlled.

A first preferred embodiment of the present invention dynamically associates each item of the rainfall level in Table 1 to each item of the wiping level in Table 2. For example, the rainfall levels n to n-5 are allocated to high-speed continuous wiping in one driving scene, while the rainfall levels n to n-8 to high-speed continuous wiping in another driving scene. By lowering the lower limit of the rainfall level to be allocated to the high-speed continuous wiping in this way, the wiping level can be raised for a predetermined rainfall level.

A concrete method for dynamic association is to determine a driving scene by comprehensive judgment on circumstances based on car speed information, sensitivity adjustment volume information, information on change in adhesion-state of raindrops on detection surface, automatic light information, other control information such as a timer and any other vehicle information and to dynamically determine correspondence between the rainfall level items and wiping level items according to the determined driving scene.

In an adjustment method of wiping determination condition for changing the correspondence between the rainfall level items and the wiping level items in this way, to increase or raise the wiping level means to bring the wiping level associated with a specific rainfall level to a higher one (shorter waiting time or faster wiping speed). On the other hand, to decrease or lower the wiping level means to bring the wiping level associated with a specific rainfall level to a lower one (longer waiting time or slower wiping speed).

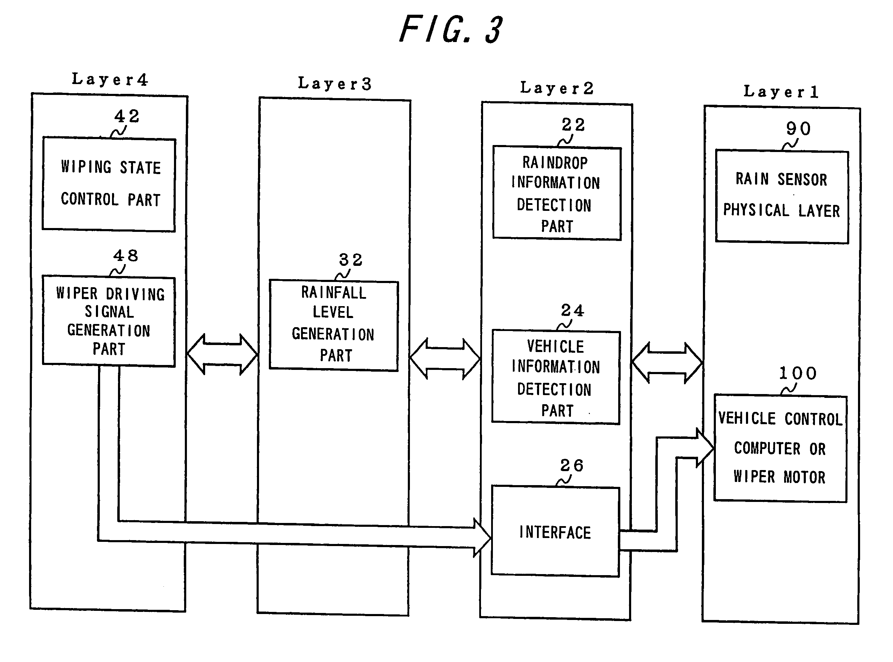

Next, the first preferred embodiment of the present invention will be described more concretely. Fig. 3 is a block diagram for explaining the construction of the wiper control device according to the first preferred embodiment of the present invention in layered structure. In Fig. 3, the wiper control device according to the first preferred embodiment of the present invention can be represented by four-layered construction, and between each of the layers, data or signals are made to communicate through a common interface such as SAP (service access point), for example.

A first layer includes a rain sensor physical layer 90 and a vehicle control computer or a wiper motor 100, a second layer includes a raindrop information detection part 22, a vehicle information detection part 24 and an interface 26, a third layer includes a rainfall level generation part 32, and a fourth layer includes a wiping state control part 42 and a wiper driving signal generation part 48. Each of them can be realized by software.

The rain sensor physical layer 90 is comprised by an optical mechanism and a circuit, an optical mechanism in the method that light from a light emitting element is reflected by a detection surface and a reflected light is received by a light receiving element and circuits such as a filter circuit for processing output of the light receiving element, an amplifier circuit, an A/D converter, etc., for example. An example of such a rain sensor is disclosed in the JP-A-2001-180447 and the JP-A-2002-277386.

The optical mechanism will be described. Light emitted from a light emitting element such as an LED, for example, is led to a glass substrate (windshield glass) which is a transparent substrate to detect water drops through a prism glass or the like. The led light is fully reflected by the detection surface and enters a light receiving element such as a photodiode, for example, through the above prism glass. Such an optical mechanism is arranged / constituted so that in the state where no water drop adheres, for example, the maximum output is generated at the light receiving element. At this time, if there is adhesion of a water drop or the like on the detection surface, the output of the light receiving element is lowered. Such a detection surface is arranged in the range of wiping operation of the wiper.

A vehicle control computer or wiper motor 100 is connected to the wiper control device of the present invention and can be selected as appropriate according to the preferred embodiment of the present invention. When the vehicle control computer is connected, the wiper motor is controlled through the vehicle control computer. When the wiper motor is connected, the wiper motor is directly controlled.

A raindrop information detection part 22 detects and outputs various types of information relating to raindrops based on an output signal of the light receiving element of the rain sensor. Information includes phenomenon as adhesion of raindrops, fluctuation of adhering rain drops, displacement amount of signal level per predetermined time, etc.

A vehicle information detection part 24 detects and outputs various type of information controlled on the vehicle side. Vehicle information includes an auto stop signal indicating operation section of the wiper, car speed information, position information of wiper switch, auto light information, set position information of sensitivity volume, position information of light switch, etc.

An interface 26 converts and outputs a wiper driving signal from the higher layer (fourth layer) to a signal in the format suitable for the vehicle control computer or wiper motor, respectively.

A rainfall level generation part 32 determines the current rainfall level based on the output of the raindrop information detection part 22 and generates the rainfall level. In concrete, to which of the rainfall levels defined in Table 1 of Fig. 2 the level corresponds is determined. As mentioned later, it is preferable that an established reference rainfall level and a temporary rainfall level should be provided for the rainfall level.

A wiping state control part 42 determines a driving scene using the car speed information, rainfall level information, auto light information, control information such as a timer, etc. and adjust the correspondence between the rainfall level and the wiping level according to the determined driving scene. For example, the wiping state control part 42 determines the driving scene based on the rainfall level generated by the rainfall level generation part 32, car speed information detected by the vehicle information detection part 24, auto light information, etc. and determines to which wiping level a predetermined rainfall level is allocated according to the determined driving scene. Also, when the sensitivity volume has been set, the sensitivity volume is considered as necessary to adjust the correspondence between the rainfall level and the wiping level.
The wiping state control part 42 is provided with a function to determine a driving scene and a function to adjust correspondence in this way.

A wiper driving signal generation part 48 determines a wiping state as the items in Table 2 of Fig. 2 based on the correspondence between the rainfall level and the wiping level set by the wiping state control part 42 and the rainfall level generated by the rainfall level generation part 32 and outputs a wiper driving signal of a predetermined wiping waiting time and a predetermined wiping speed. The wiper driving signal is outputted to the vehicle control computer or wiper motor 100 through the interface 26.

### (Generation of rainfall level)

Next, generation of the rainfall level will be described. The rainfall level can be determined based on the raindrop information detected by the raindrop information detection part 22.

A method for detecting the raindrop information used for generation of the rainfall level will be described. As a method for detecting the rainfall information, the method for detecting dynamic adhesion of raindrops disclosed by the inventors (JP-A-2001-180447) can be used. With this method, a delay signal is generated from a signal of the light receiving element, a difference between the signal of the light receiving element and the delay signal is acquired and it is determined that there was a collision of a water drop on the detection surface when the difference occurs. Alternatively, a first delay signal of the signal of the light receiving element is generated, a second delay signal is generated from the first delay signal, a difference between the first delay signal and the second delay signal is acquired and when the difference occurs, it is determined that there was a collision of a water drop on the detection surface. By this method, dynamic adhesion itself of raindrops or the like can be captured.

Therefore, the raindrop information detection part 22 detects the phenomenon of collision of the raindrops on the detection surface and outputs it as adhesion of raindrops.

The rainfall level generation part 32 may determine the level of rainfall based on such raindrop adhesion information and generate the current rainfall level. For example, it may be so constituted that rainfall levels are defined stepwise based on the number of adhesion per predetermined time, and the rainfall level generation part 32 determines the rainfall level according to the number of adhesion per predetermined time. In concrete, the larger the number of adhesion per predetermined time is, the higher the rainfall level becomes, and if the number of adhesion is small, the rainfall level may be lowered. In this way, the rainfall state can be divided into detailed levels and defined based on the raindrop adhesion information.

Also, for determining the rainfall level, fluctuation of adhering raindrops can be used. In the JP-A-2002-277386 disclosed by the inventors, a method is disclosed which can indirectly detect dynamic fluctuation of adhesion by dynamic fluctuation of a signal of a light receiving element obtained through the raindrops adhering on the detection surface and determines the size of a raindrop and how the raindrops are hitting by a change pattern of the fluctuation of the signal. In this way, the size and the like of the raindrops can be estimated by information of raindrop fluctuation, by combining this raindrop fluctuation information with adhesion of raindrops, the rainfall state can be divided into further detailed levels.

The change pattern of the fluctuation of the signal used for the above determination can be a change pattern of time of fluctuation of the above signal, and the length of fluctuation of adhesion can be detected indirectly by the length of fluctuation of the signal. For example, if the adhesion is a raindrop, the larger the raindrop is, the longer the fluctuation lasts as its physical properties, and the size of the raindrop can be estimated from the length of the detected fluctuation.

Also, the change pattern of the fluctuation of the signal used for the above determination can be a change pattern of the size of fluctuation of the above signal, and the size of fluctuation of adhesion can be indirectly detected by the size of the fluctuation of the signal. For example, if the adhesion is a raindrop, the larger the raindrop is, the larger the fluctuation is as its physical properties, and the size of the raindrop can be estimated from the detected size of the fluctuation. Parameters representing the size of fluctuation include the number of change times of increase / decrease within the fluctuation, change amount of the increase, direction of increase / decrease of the change, etc.

Therefore, the raindrop information detection part 22 detects and outputs the change pattern of the signal fluctuation. In concrete, the length of the signal fluctuation, the number of changes of increase/ decrease within the signal fluctuation, the change amount of increase, direction of increase / decrease of the change, etc. are outputted.

The rainfall level generation part 32 may determine the state of rainfall in more detail from the adhesion of raindrops and change pattern of the signal fluctuation detected by the raindrop information detection part 22 in this way.

For example, correspondence between various characteristics of change of signal fluctuation including the change pattern of the size of signal fluctuation and the change pattern of the length of the signal fluctuation and the size of raindrops is acquired experimentally, and this is stored in the memory as a table. The rainfall level generation part 32 may determine the size of the raindrops from the change pattern of the detected signal fluctuation based on this table.

The rainfall level generation part 32 may determine the rainfall level from the number of adhering raindrops detected per predetermined time and the size of adhering raindrops and generate the current rainfall level.

Moreover, as a method for detecting raindrop information, a method for detecting raindrops by comparison with a reference value (so-called threshold value method) disclosed in the JP-A-61-37560 and a method fro detecting raindrops from an integrated value of light receiving element output (so-called integration method) disclosed in the JP-A-4-349053 can be used. The rainfall level generation part 32 can determine the rainfall level based on the raindrop information detected by these methods.

### (Temporary rainfall level)

Next, the rainfall level generation part 32 generates an established reference rainfall level and a temporary rainfall level. The temporary rainfall level is determined in rapid response to change of the rainfall situation. That is, if detection information from the raindrop information detection part 22 is changed, the temporary rainfall level is changed in accordance with it. In the meantime, the established reference rainfall level is determined following a relatively long determination period.

An example of a control method of the temporary rainfall level and the established rainfall level will be described. When the detection information from the raindrop information detection part 22 is changed, the rainfall level generation part 32 determines the temporary rainfall level in accordance with it. It is determined using a timer if the temporary rainfall level is maintained for a predetermined period of time. If the temporary rainfall level is maintained for a predetermined period of time, the reference rainfall level is updated by the maintained temporary rainfall level. In the meantime, if the temporary rainfall level is not maintained for a predetermined period of time but for the time being, the reference rainfall level is not changed but maintained as original.

### (Wiping state control part)

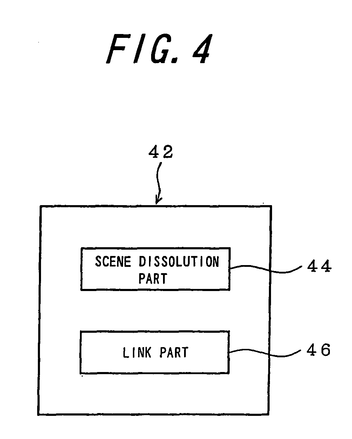

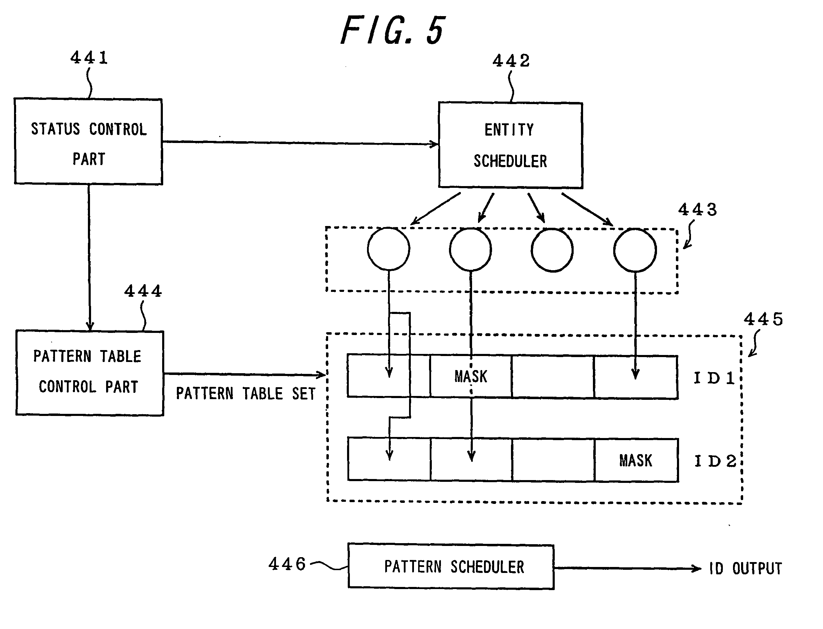

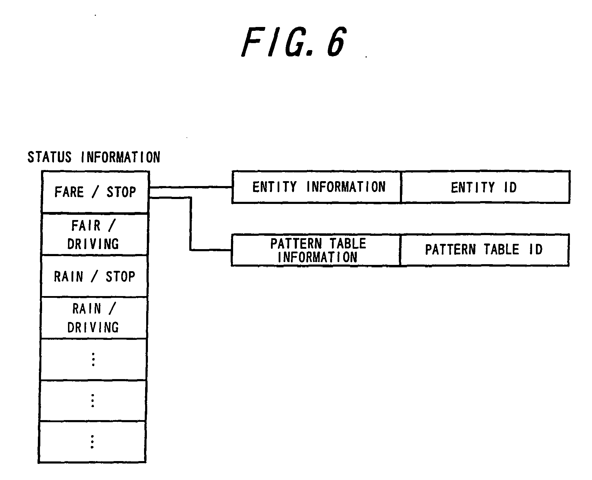

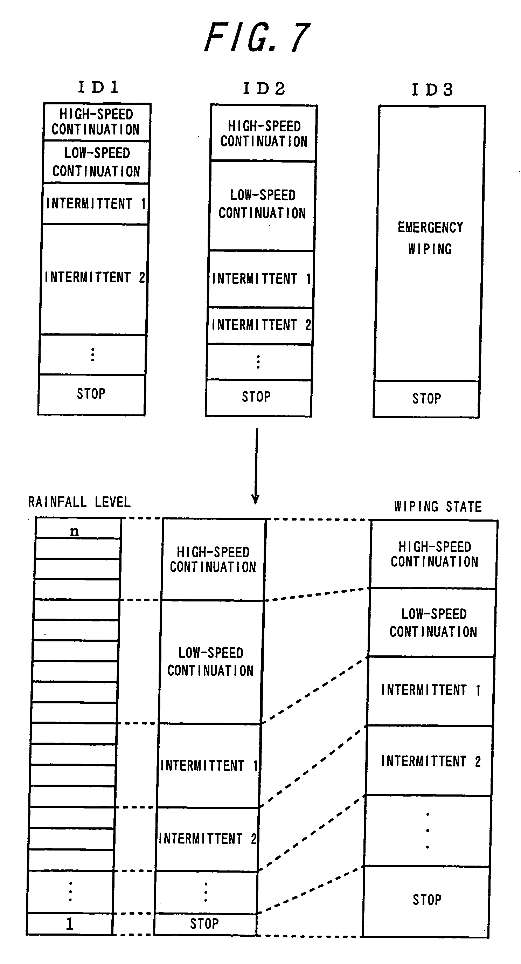

Next, the wiping sate control part 42 will be described. Fig. 4 is a block diagram for explaining the configuration of the wiping state control part, Figs. 5 and 6 are conceptual diagrams for explaining a method for scene determination and Fig. 7 is a conceptual diagram for explaining a method of dynamic link.

As shown in Fig. 4, the wiping state control part 42 has a scene dissolution part 44 and a link part 46. The scene dissolution part 44 determines a driving scene from the rainfall level generated by the rainfall level generation part 32, car speed information detected by the vehicle information detection part 24 and auto light information and according to the determined driving scene, adjusts the correspondence between a predetermined rainfall level and a predetermined wiping level. As an example of such adjustment, a link pattern for linking Table 1 (rainfall level) with Table 2 (wiping state) as shown in Fig. 2 is determined, and ID is outputted as identification information for identifying the determined link pattern.

The link part 46 selects a specific link pattern based on the identification information outputted by the scene dissolution part 44 from a plurality of link patterns and links the rainfall level items and the wiping level items with the selected link pattern.

### (Scene dissolution part)

Next, the scene dissolution part will be described. As shown in Fig. 5, the scene dissolution part 44 includes a status control part 441, an entity scheduler 442, a pattern table control part 444 and a pattern scheduler 446.

The status control part 441 controls status comprised by a current vehicle state and a current driving environment state. In concrete, the current vehicle state (stop, driving, acceleration, deceleration, etc.) is determined from the car speed information. Also, the current driving environment state is determined from the rainfall level, auto light information, etc. The driving environment state is, for example, a rainfall state (fair weather state, rainy state), a light/dark state, etc. This rainfall state is determined from the rainfall level. Also, the light/dark state is determined from the auto light information, position information of light switch, etc., for example.

The status control part 441 selects a current status from a status information table as shown in Fig. 6 with the determined current vehicle state and the current driving environment state as a reference. In Table of Fig. 6, different statuses are set to the respective addresses, and each of the addresses is linked to the entity information and the pattern table information. Therefore, the status control part 441 selects one address according to the combination of the vehicle state and the driving environment. When the status is changed, the address of the changed status is selected.

Next, the entity scheduler 442 starts only an entity 443 liked to the status determined by the status control part 441 from the plurality of entities. As shown in Fig. 6, specific entity information is linked to each of the status addresses, and only the entity 443 linked to the current status is identified and started. In concrete, by the entity ID included in the entity information, one or plural specified entities are identified and started.

Next, the pattern table control part 444 selects and sets a pattern table 445 linked to the status determined by the status control part 441 from a plurality of pattern tables. As shown in Fig. 6, specific pattern table information is linked to each of the status addresses, and only the pattern table 445 linked to the current status is identified and set as an object to be monitored. In concrete, by the pattern table ID included in the pattern table information, one or plural specified pattern tables are identified and selected.

It is preferable that entities are provided in plural in accordance with the number of events to be detected. It is preferable that each of the entities monitors a specific event. For example, an acceleration detection entity detects an event of vehicle acceleration. Also, a fair weather state detection entity detects an event that rain has stopped and it is cleared up. A tunnel entrance detection entity detects an event of entrance of a vehicle to a tunnel. According to the status, only a specific entity among the plurality of entities is started by the entity scheduler 442. Each of the entities included in the started entity 443 has a function to detect occurrence of a predetermined event and to register the detected event in a set pattern table 445.

Such detection of events can be made from temporary rainfall level information, car speed information, auto light information, etc. Also, the entity has a timer and can detect an event established including a concept of time such as an event that a specific state (stop of rainfall, for example) lasts for a predetermined period of time or an event that speed or the like is changed by a predetermined amount in a predetermined period of time.

Each of the pattern tables corresponds to a specific link pattern, respectively, and provided in the same number as that of the link patterns. Each of the pattern tables has a pattern of event registration block corresponding to a driving scene to be determined, and when all the event registration blocks are filled in a specific pattern table, the specific driving scene is detected. Such pattern tables are preferably provided in plural according to the driving scenes to be detected. From the plurality of pattern tables, a predetermined pattern table is selected by the pattern table control part 444 and set as an object to be monitored.

The pattern table 445 set by the pattern table control part 444 has one or plural event registration blocks for registering events. Then, various specific patterns are set by masking arbitrary blocks. Alternatively, specific patterns may be set by adding identification information such as ID to identify specific events to each of the event registration blocks so that only the specific events are registered.

Operation of the entity started in this way and the pattern table set as an object to be monitored will be described. As shown in Fig. 5, when a specific entity detects its own event, the event is registered in the pattern table. At this time, the entity can register the event only for the event registration block allocated to the event. Therefore, some events may be registered in all the pattern tables, while others may be registered only in one pattern table.

Next, the pattern scheduler 446 monitors the set pattern table, detects the pattern table in which events are registered in all the event registration blocks and outputs the ID given to the detected pattern table. This ID is information for identifying the link table. The pattern scheduler 446 may be combined with the above-mentioned pattern table control part 444 so that one pattern scheduler has both functions.

Next, the link part 46 selects a specific link pattern based on the ID outputted by the pattern scheduler 446, as shown in Fig. 7, and links the rainfall level items to the wiping state items by the selected link pattern. As shown in Fig. 7, different correspondence patterns are set for each of the link patterns, and by selecting an appropriate link pattern according to the driving scene, correspondence can be adjusted appropriately.

In the above explanation, it is so constituted that the entity scheduler 442 is provided and only the necessary entity is started for the current status. However, by constituting so that the event registration block of the pattern table accepts only specific events, all the entities may be operated at the same time. Therefore, the entity scheduler 442 may be omitted in the configuration.

However, by providing the entity scheduler 442, the same control can be realized by limiting the number of entities operating at the same time. This is because the event to be monitored will change according to the status and it is not necessary to operate all the entities at the same time. When the status is a driving state, for example, the event of stop should be detected, but the entity to detect the event of start from stop is not required. Also, when the status is the fair weather state, the event to be detected is start of rain, adhesion of mist, continuation of fair weather, etc., and the entity to detect the event of stop of rainfall does not need to be operated.

By providing the entity scheduler 442 in this way, the number of simultaneously operating entities can be reduced, which enables reduction of resources required for processing.

### (Operation of the first preferred embodiment)

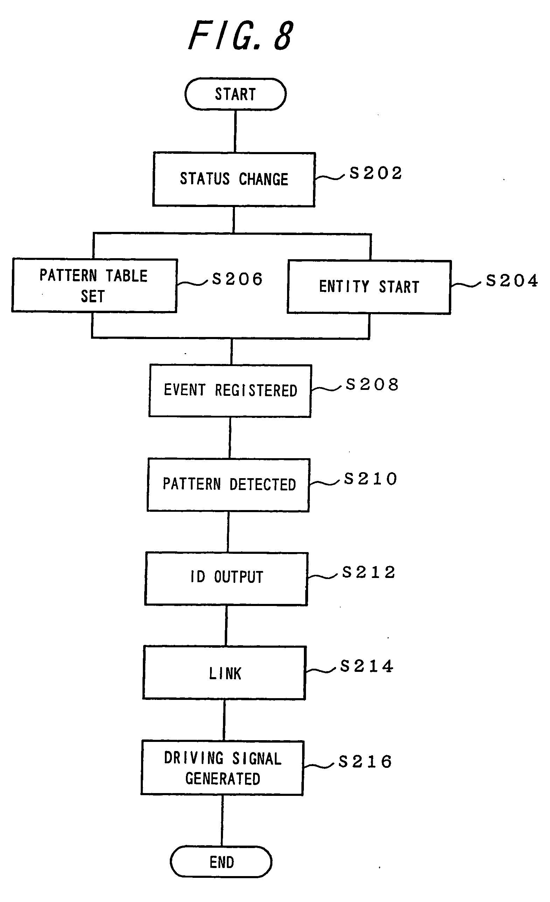

Next, operation of the first preferred embodiment of the present invention will be described referring to Fig. 8. Fig. 8 is a flowchart for explaining the operation of the first preferred embodiment. First, at Step 202, the status control part 441 determines the current status and selects the applicable address of the status information table. For example, when the rainfall level is changed, it is preferable to determine this by the reference rainfall level. That is because rainfall in the nature will change, and if a status is changed following a temporary change, behavior of the wiper will become unstable. Therefore, the status is changed at the state where the reference rainfall level is changed from fair weather to a specific rainfall level, for example.

Next, at Step 204, the entity scheduler 442 receives the entity information linked to the address of the status information table selected by the status control part 441 and identifies and starts the specified entity.

In parallel with this, at Step 206, the pattern table control part 444 receives the pattern table information linked to the address of the status information table selected by the status control part 441 and selects the specified pattern table and sets it as an object to be monitored.

Next, at step 208, the entity having been started detects its own event and registers the detected event in the pattern table. When registering the event, only the event registration blocks to which the event is allocated are used. Such detection of events and registration of detected events are performed at each entity when there are a plurality of entities.

Next, at Step 210, the pattern scheduler 446 detects the pattern table in which events have been registered in all the event registration blocks. At Step 212, the ID allocated to the detected pattern table is outputted.

At Step 214, the link part 46 selects a specified link pattern from a plurality of link patterns based on the ID outputted by the pattern scheduler 446 and links the rainfall level table to the wiping state table by the selected link pattern.

Next, at Step 216, the wiper driving signal generation part 48 applies the temporary rainfall level generated by the rainfall level generation part 32 to a rainfall level table as shown in Fig. 7, determines the wiping state of the wiper by selecting a specific wiping level associated with the rainfall level and outputs a wiper driving signal of a predetermined wiping waiting time and a predetermined wiping speed.

In this way, according to the preferred embodiment of the present invention, the current driving scene is determined by occurrence of a specific event and a link pattern corresponding to the determined driving scene can be selected. Also, by associating the rainfall level items with the wiping state items using such a link pattern, a wiping determining condition according to a specific driving scene can be set.

### (Application example)

Next, a preferred embodiment of the present invention will be described in concrete using various application examples.

### (Entrance into a tunnel)

When entering a tunnel in the state with rainfall more than predetermined level, fine raindrops splashed up by a front vehicle are wiped at a somewhat low wiping level in the tunnel. On the other hand, wiping at a high wiping level is needed for rapid deterioration of visibility at exit from the tunnel. Therefore, it is necessary to increase the wiping frequency quickly in preparation for the exit from the tunnel for a rainfall more than the predetermined level.

In this case, the status before entrance to the tunnel is rainfall more than a predetermined amount and the driving speed is constant. Events to be detected are an event that the rainfall is rapidly decreased by entrance to the tunnel and an event that the decreased state lasts for a predetermined period of time. Also, when there is auto light information, there can be an event that the auto light system determines turning-on of head lights (including front position lights) upon entrance to the tunnel.

Therefore, the pattern table control part 444 selects and sets the pattern table provided with the event registration blocks to register these events. The entity scheduler 442 starts the entity to detect these events. Then, the started entity detects its own events and registers them in the pattern table and at the timing when all the event registration blocks are registered, the pattern scheduler 446 outputs the ID given to the pattern table.

Next, the link part 46 selects a specific link pattern based on the outputted ID and links the rainfall level table with the wiping state table. In this case, a high wiping level is set for the rainfall more than a predetermined level, while a low wiping level is set for weak rain such as splash.

### (Start)

In the state that the driving environment is constant rainfall and the vehicle is started from stop and accelerated, the amount of raindrops hitting the windshield is increased, and this should be followed. Therefore, at acceleration, the wiping level should be raised temporarily. In the meantime, when acceleration is finished and driving at a constant speed is started, the adhesion amount is stabilized, and the wiping level should be returned to the original wiping level.

In this case, in the status before start, rainfall is at a predetermined amount or more and the driving speed is zero. The events to be detected are an event that the rainfall has not been suddenly changed and an event of acceleration from stop.

Therefore, the pattern table control part 444 selects and sets the pattern table provided with the event registration block to register these events. Also, the entity scheduler 442 starts the entity to detect these events. Then, the started entity detects its own events and registers them in the pattern table and at the timing when all the event registration blocks are registered, the pattern scheduler 446 outputs the ID given to the pattern table.

Next, the link part 46 selects a predetermined link pattern based on the outputted ID and links the rainfall level table with the wiping state table. In this case, the selected link pattern is set such that the wiping level is higher than that at stop for the entire rainfall level.

Next, similarly, an event that the driving speed is stabilized at a constant speed is detected and the link pattern to return the correspondence to original is selected, and the wiping level is returned to the original wiping level.

### (Deceleration)

In the state of deceleration from the driving environment of a specific rainfall state and the vehicle driving at a predetermined constant speed, it is necessary to change the level to the lower wiping level from the set wiping level.

In this case, the status before deceleration is rainfall at a predetermined amount or more and the driving speed is constant. The events to be detected are an event that rainfall has not been suddenly changed and an event that the car speed is decelerated to a specific low speed.

Therefore, the pattern table control part 444 selects and sets the pattern table provided with the event registration block to register these events. Also, the entity scheduler 442 starts the entity to detect these events. Then, the started entity detects its own events, registers them in the pattern table and at the timing when all the event registration blocks are registered, the pattern scheduler 446 outputs the ID given to the pattern table.

Next, the link part 46 selects a predetermined link pattern based on the outputted ID and links the rainfall level table with the wiping state table. In this case, the selected link pattern is set such that the wiping level is lower than that in driving for the entire rainfall levels.

### (Rapid acceleration)

When a vehicle is rapidly accelerated, it is necessary to exceptionally increase the wiping level for the entire rainfall level to avoid risk. For example, an emergency wiping state to avoid risk is provided at a level higher than the high-speed continuous wiping level of the wiping state. Then, link may be made to this wiping state.

In this case, the status before the rapid acceleration does not matter. The event to be detected is rapid acceleration. In order to avoid risk, the entity for detecting rapid acceleration may be kept on all the time. The pattern table for rapid acceleration may be also set all the time.

When the event of rapid acceleration is detected, only by registration of the event, the pattern scheduler 446 outputs the ID given to the pattern table and the entire rainfall level is linked to the emergency wiping.

Also, it is necessary to perform control of returning the wiping level to the original by detecting the event that the rapid acceleration is finished. Therefore, when the status is rapid acceleration, the entity to detect the event of end of the rapid acceleration is started and upon detection of this event, the ID of the link pattern of the original wiping level is outputted.

### (Rapid deceleration)

When a vehicle is rapidly decelerated, it is also necessary to exceptionally increase the wiping level for the entire rainfall level to avoid risk. For example, an emergency wiping state to avoid risk is provided at a level higher than the high-speed continuous wiping level of the wiping state. Then, link may be made to this wiping state.

In this case, the status before the rapid deceleration is driving and the event to be detected is rapid deceleration. In order to avoid risk, the entity for detecting rapid deceleration may be kept on all the time. The pattern table for rapid deceleration may be also set all the time.

When the event of rapid deceleration is detected, only by registration of the event, the pattern scheduler 446 outputs the ID given to the pattern table and the entire rainfall level is linked to the emergency wiping.

Also, when the rapid deceleration is finished, it is necessary to perform control to return the wiping level to the original after the higher wiping level is maintained for a predetermined time to avoid risk. Therefore, when the status is rapid deceleration, the entity to detect the event that a predetermined time has elapsed since the rapid deceleration is ended, and upon detection of this event, the ID of the link pattern of the original wiping level is outputted.

### (Fair weather)

When rainfall is ended after the rainfall state, various water drops adhere to the windshield. There can be a case of temporary adhesion of a small amount of water drops such as adhesion of several drops falling from an electric cable or a case of temporary adhesion of a large amount of water drops caused by an oncoming car splashing a puddle, for example. In the former case, a somewhat low wiping level is needed. On the other hand, the latter case requires a higher wiping level.

In this case, the status before clearing up is rainfall. The event to be detected is an event that a predetermined time has elapsed since rainfall is ended. This predetermined time may be set to a long time, for several minutes, for example, to assure that the rainfall has ended.

In this case, the selected link pattern sets a higher wiping level for continuous adhesion of raindrops with a large diameter and a lower wiping level for micro water drops.

### (Second preferred embodiment)

Next, a second preferred embodiment of the present invention will be described. The above first preferred embodiment is to control the correspondence between the rainfall level and the wiping level as a wiping determining condition, while the second preferred embodiment of the present invention is to control a detection sensitivity of raindrops as the wiping determining condition.

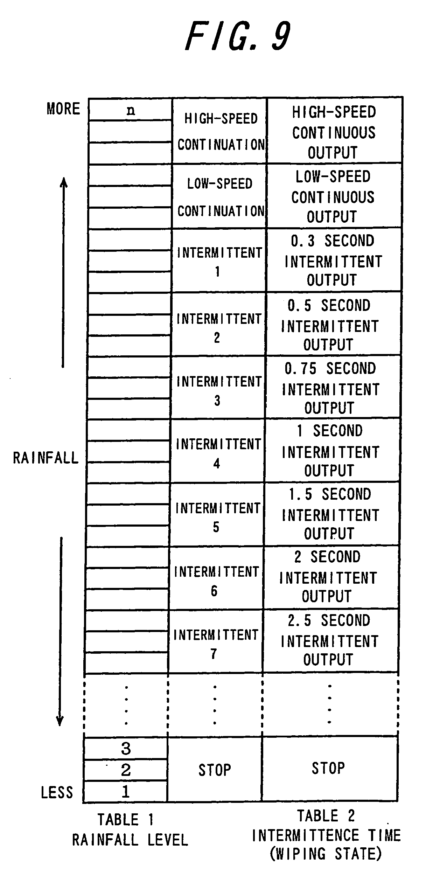

Fig. 9 is a conceptual diagram for explaining the second preferred embodiment of the present invention. The above first preferred embodiment changes the correspondence between each of the rainfall level items in Table 1 and each of the wiping level items in Table 2. In the meantime, the second preferred embodiment of the present invention is, as shown in Fig. 9, the correspondence between each of the rainfall level items in Table 1 and each of the wiping level items in Table 2 is fixed, while the detection sensitivity for the raindrops adhering on the detection surface is adjusted.

The consideration by the inventors has confirmed that an extent that the raindrops adhering to the windshield prevents visibility of the driver is changed by brightness of the outside of the vehicle. In concrete, in the bright daytime, adhering raindrops can be easily recognized and the raindrops with relatively small diameter tend to prevent the visibility in a short time. On the other hand, it was confirmed that, in the dark nighttime, adhering raindrops cannot be easily recognized and it takes a longer time for the same small-diameter raindrops to prevent the visibility.

Therefore, it may be so constituted that, when the outside the vehicle is bright, the detection sensitivity for the small-diameter raindrops at a predetermined level or less is raised, while, when the outside the vehicle is dark, the detection sensitivity for the same raindrops is lowered. The second preferred embodiment of the present invention is to adjust the detection sensitivity for the raindrops adhering on the detection surface according to the driving scene in this way.

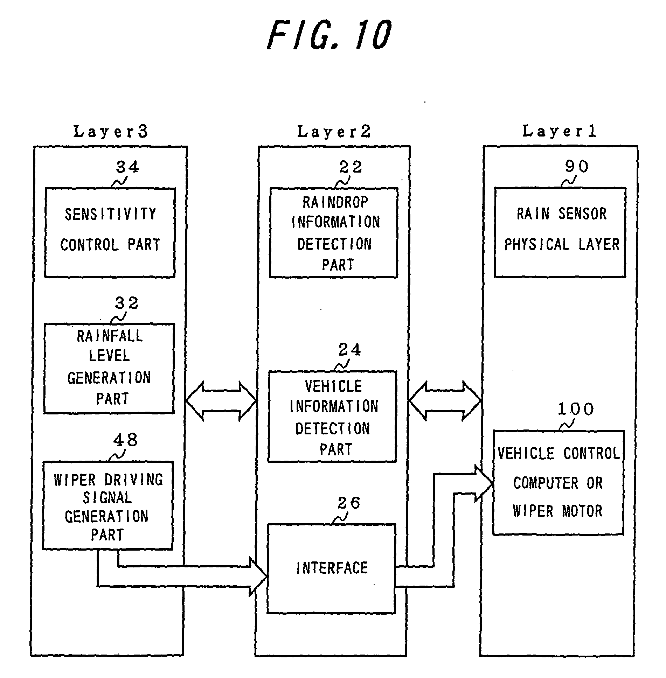

Next, the configuration of the second preferred embodiment of the present invention will be described referring to Fig. 10. Here, Fig. 10 is a block diagram for explaining the configuration of the wiper control device according to the second preferred embodiment of the present invention in the layered structure. In Fig. 10, the wiper control device according to the second preferred embodiment of the present invention can be represented by the configuration of three layers.

The same configuration as shown in the above first preferred embodiment is given the same reference numerals and detailed description will be omitted. In this second preferred embodiment, the third layer includes the rainfall level generation part 32, a sensitivity control part 34 and the wiper driving signal generation part 48, and there is no fourth layer. Each of the parts can be realized by software.

The sensitivity control part 34 determines the driving scene using control information such as car speed information, rainfall level information, auto light information, light switch position information, timer, etc., and controls the detection sensitivity for the adhering raindrops according to the determined driving scene. For example, the sensitivity control part 34 determines the driving scene from the rainfall level generated by the rainfall level generation part 32, the car speed information detected by the vehicle information detection part 24, auto light information, light switch position information, etc., and adjusts the detection sensitivity for the raindrops according to the determined driving scene. Also, when the sensitivity volume is set, the detection sensitivity for raindrops is adjusted considering the sensitivity volume as necessary. In this way, the sensitivity control part 34 is provided with a function to determine driving scene and a function to adjust detection sensitivity.

As a method for adjusting the detection sensitivity for raindrops, it may be so constituted that adhesion itself of raindrops is detected but evaluation of the detected raindrops is fluctuated. In concrete, the rainfall level associated with the detected raindrops may be changed. For example, the rainfall level corresponding to the detected raindrop with a predetermined small diameter may be lowered.

As another method for adjusting the detection sensitivity, it may be so constituted that the adhesion itself of the raindrops with a predetermined diameter or less is not detected. For example, by increasing a threshold value for signal change caused by adhesion of raindrops, it may be so constituted that a signal change not exceeding this threshold value (that is, adhesion of raindrops of a predetermined diameter or less) is not detected. Also, by lowering a driving current value of a light emitting element, an output signal of the light receiving element is made smaller so that the signal change by adhesion of raindrops with the predetermined diameter or less does not or hardly appear. When the driving current value of the light emitting element is lowered, it is preferable since the life of the LED, which is the light emitting element can be prolonged. That is because the life of LED is in inverse proportion to the size of the driving current.

The rainfall level generation part 32 generates the rainfall level after such control of the sensitivity control part 34. The concrete rainfall level generating method is the same as mentioned above. Also, in this second preferred embodiment, since the correspondence between the rainfall level and the wiping level is fixed, the wiper driving signal generation part 48 determines the wiping state corresponding to the rainfall level based on the rainfall level generated by the rainfall level generation part 32 and outputs a wiper driving signal of a predetermined wiping waiting time and a predetermined wiping speed.

A concrete control example will be described. First, the sensitivity control part 34 determines the driving scene. In concrete, in the status where the outside the vehicle is bright, the event that it has got dark is detected. This can be detected from the information that the auto light system determines lighting of head lights (including front position lights) or position information of the light switch. According to this driving scene where the outside has got dark, the sensitivity control part 34 lowers the detection sensitivity for the raindrops with the predetermined small diameter. They may be realized by lowering the rainfall level associated with the raindrops or not by detecting the adhesion itself of the raindrops.

### (Third preferred embodiment)

Next, a third preferred embodiment of the present invention will be described. The above-mentioned first preferred embodiment controls the correspondence between the rainfall level and the wiping level as the wiping determining condition, and the second preferred embodiment controls the detection sensitivity of raindrops as the wiping determining condition. The third preferred embodiment of the present invention is to control both of then as the wiping determining conditions.

In concrete, in the above-mentioned first preferred embodiment, correspondence between each of the rainfall level items in Table 1 and each of the wiping level items in Table 2 is changed. In the meantime, in the second preferred embodiment, the detection sensitivity for the raindrops adhering on the detection surface is adjusted. In the third preferred embodiment of the present invention, both may be used. That is, the detection sensitivity for the raindrops adhering on the detection surface is adjusted according to the driving scene, and the correspondence between each of the rainfall level items and each of the wiping level items may be changed according to the driving scene.

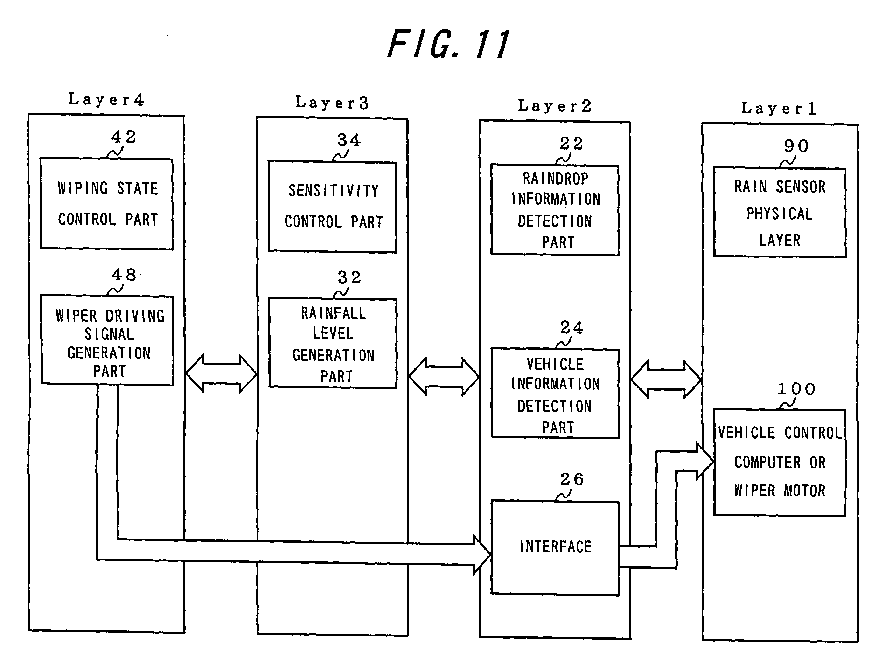

Next, the configuration of the third preferred embodiment of the present invention will be described using Fig. 11. Fig. 11 is a block diagram for explaining the configuration of the wiper control device according to the third preferred embodiment of the present invention in the layered structure. The wiper control device according to the third preferred embodiment of the present invention can be represented by the configuration of four layers.

The same reference numerals are given to the same configuration as in the above-mentioned first and second preferred embodiments and detailed description will be omitted. In this third preferred embodiment, the third layer includes the rainfall level generation part 32 and the sensitivity control part 34, and the fourth layer includes the wiping state control part 42 and the wiper driving signal generation part 48. Concrete functions of these parts are the same as mentioned above, and description will be omitted.

### INDUSTRIAL APPLICABILITY

As mentioned above, according to the present invention, a driving scene can be grasped appropriately and the appropriate wiping determining conditions suitable for the scene can be chosen. Also, even the same driver can automatically switch the wiping determining conditions according to the change of the scene, and the wiper operation more suitable for the sense of the driver can be realized.

## Claims

1. A method for controlling operation of a wiper by reflecting light emitted from a light emitting element on a detection surface provided at a part of a wiper wiping area of a windshield glass of a vehicle and by detecting a state of said detection surface by receiving said reflected light by a light receiving element, comprising the steps of:
(a) determining a driving scene from vehicle state information and driving environment information; and
(b) adjusting a wiping determining condition for determining the wiping state of said wiper according to said determined driving scene.

2. A wiper control method according to claim 1, wherein said step (b) for adjusting a wiping determining condition of the wiper includes a step for adjusting detection sensitivity for detecting raindrops adhering on said detection surface.

3. A wiper control method according to claim 1, wherein the wiping state of said wiper is defined in a plurality of wiping levels stepwise classified by a wiping waiting time and a wiping speed, and
said step (b) for adjusting a wiping determining condition of the wiper includes a step for adjusting the correspondence between rainfall states and each of wiping levels.

4. A wiper control method according to claim 1, wherein the wiping state of said wiper is defined in a plurality of wiping levels stepwise classified by a wiping waiting time and a wiping speed, and
said step (b) for adjusting a wiping determining condition of the wiper includes a step for adjusting detection sensitivity for detecting raindrops adhering on said detection surface and a step for adjusting the correspondence between each of rainfall states and each of wiping levels.

5. A wiper control method according to any one of claims 1 to 4, wherein said step (a) for determining the driving scene determines the driving scene by detecting occurrence of a predetermined event.

6. A wiper control device for controlling operation of said wiper by reflecting light emitted from a light emitting element on a detection surface provided at a part of a wiper wiping area of a windshield glass of a vehicle and by detecting a state of said detection surface by receiving said reflected light by a light receiving element, comprising:
a driving scene determination part for determining a driving scene from vehicle state information and driving environment information; and
a wiping determining condition control part for adjusting a wiping determining condition for determining the wiping state of said wiper according to said determined driving scene.

7. A wiper control device according to claim 6, wherein said wiping determining condition control part includes a detection sensitivity control part for adjusting detection sensitivity for detecting raindrops adhering on said detection surface.

8. A wiper control device according to claim 6, wherein the wiping state of said wiper is defined in a plurality of wiping levels stepwise classified by a wiping waiting time and a wiping speed, and
said wiping determining condition control part has a correspondence control part for adjusting the correspondence between rainfall state and each of the wiping levels.

9. A wiper control device according to claim 6, wherein the wiping state of said wiper is defined in a plurality of wiping levels stepwise classified by a wiping waiting time and a wiping speed, and
said wiping determining condition control part has a detection sensitivity control part for adjusting detection sensitivity for detecting raindrops adhering on said detection surface and a correspondence control part for adjusting the correspondence between rainfall state and each of the wiping levels.

10. A wiper control device according to any one of claims 6 to 9, wherein said driving scene determination part determines a driving scene by detecting occurrence of a predetermined event.
